# EUROPEAN PATENT SPECIFICATION

(11) **EP 3 431 450 B1**
(45) Date of publication and mention of the grant of the patent: **27.01.2021**
(21) Application number: 18184853.2
(22) Date of filing: 20.07.2018
(51) Int. Cl.: C03B 33/03, C03B 33/037, C03B 33/07

(54) **CUTTING METHOD FOR CUTTING MANUALLY A LAMINATED GLASS SHEET**
VERFAHREN ZUM HANDISCHEN SCHNEIDEN VON VERBUNDENEN GLASSCHEIBEN
MÉTHODE DE DÉCOUPE MANUELLE DE FEUILLES DE VERRE LAMINÉES

(30) Priority: 21.07.2017 IT 201700083680
(43) Date of publication of application: 23.01.2019
(73) Proprietor: Bottero S.p.A., 12100 Cuneo (IT)
(72) Inventor: GHINAMO, Leonardo, 12100 Cuneo (IT); ARNAUDO, Fabio, 12100 Cuneo (IT); SPERANDIO, Marco, 12044 Centallo (IT)
(74) Representative: Bergadano, Mirko

(56) References cited:
- EP-A1- 2 845 840
- EP-A1- 3 064 478

## Description

The present invention relates to a method for manually cutting a laminated glass sheet, i.e. a sheet comprising two side glass sheets and an intermediate layer of thermoplastic material, commonly known as PVB, clamped between said side glass sheets.

As it is known, laminated glass sheets are cut manually on cutting tables provided with a sheet supporting plane, a cutting assembly of the outer glass sheets and a cutting assembly of the PVB intermediate layer. The cutting assembly of the side glass sheets comprises, for each side glass sheet, a respective incision tool movable in opposite directions along a straight advancement line.

The laminated sheets, normally having straight and perpendicular consecutive perimeter sides, are progressively cut according to cutting programs with cutting lines perpendicular to each other and parallel or perpendicular to the perimeter sides and commonly referred to as cutting lines according to X and cutting lines according to Y, and/or according to inclined cutting lines indicated as diagonal cutting lines, i.e. forming angles other than zero and 90° with the cutting lines X, Y and normally also with the outer sides of the sheets.

The cutting lines delimit respective lengths of sheet, which are detached one after the other from the remaining part of the sheet by truncating the outer glass sheets and cutting immediately afterwards the corresponding portion of the intermediate PVB layer.

As is known, the dimensional precision and shape of each length depends on the precision with which the sheet is positioned on the supporting plane, and increases the more the cutting lines coincide with the advancement line of the incision tools.

While the cutting along the X, Y lines is easily automated by properly instructing the machine which thus operates in complete autonomy, the cuts along the diagonal lines require, in most cases, the intervention of an operator. The latter first traces on the sheet points or reference lines identifying the diagonal cut to be made, after which he manually moves the sheet bringing the diagonal cutting line at the advancement direction. To trace the reference points or lines, the operator often uses optical devices and position indicators, such as light beams, cameras, etc. provided on the machine. In some cases, automatic tracking devices mark the reference points or lines directly on the sheet, facilitating the operator and reducing the possibility of human error.

However, the intervention of an operator, even with long experience, is often a source of errors both during the tracking phase, when envisaged, and during the subsequent positioning operation, although assisted by optical devices or position indicators. The mere fatigue of the operator or the repetitiveness of the operations also play their part to the detriment of precision. It follows that often, following the performance of diagonal cuts, the length must be discarded or undergo subsequent processing.

Machines and method for cutting glass sheets are disclosed, for example, in EP 3 064 478 A1 and EP 2 285 840 A1.

The object of the present invention is to provide a method, which makes it possible to solve the above problems simply and in an economical manner and, in particular, to cut the sheets along diagonal cuts with great precision despite human intervention.

According to the present invention, a cutting method is provided for manually cutting a laminated glass sheet comprising two side glass sheets and one intermediate layer of thermoplastic material; the sheet is cut along at least a first diagonal cutting line forming an angle other than zero and other than 90° with a peripheral side of the sheet, to form at least two lengths of sheet, the method comprising the steps of:
- using a cutting table comprising a sheet supporting plane, a first cutting assembly for the side glass sheets having incision tools which are movable along a first advancement direction, a second cutting assembly for the intermediate layer of thermoplastic material, a row of fixed reference pegs, a row of reference pegs adjustable in a position along said sheet supporting plane in a positioning direction perpendicular to said advancement direction, and a hinging head for said laminated sheet pivoting idly around its own axis perpendicular to the supporting plane and intersecting said advancement direction and motorized to translate parallel with the advancement direction, and an electronic control unit for controlling the cutting assembly, the adjustable reference pins and said hinging head,
- positioning the laminated glass sheet on said supporting plane, bringing the cutting line to said advancement direction,
- truncating said side glass sheets and cutting said intermediate layer along said cutting lines creating the two lengths of sheet;
characterised in that cutting along said first diagonal cutting line comprises the steps of:
- taking said first cutting line so that it intersects said advancement direction at an intersection point (P1), bringing a peripheral edge of said laminated sheet into abutment against at least said adjustable reference pins previously positioned by said electronic control unit, according to the position of said first cutting line,
- hinging said laminated sheet in said intersection point by means of said hinging head,
- repositioning said adjustable reference pins along said positioning direction or said hinging head along the advancement direction by means of said control unit, according to the angle formed by said first line with said peripheral edge,
- arranging a free reference bar abutting against said supporting plane and against the adjustable reference pins or against the fixed reference pins,
- rotating manually the laminated sheet around an axis passing through said intersection point until an external peripheral point of the laminated sheet is brought into abutment against said reference bar,
- truncating said side glass sheets and cutting the intermediate layer along said first cutting line, and distancing said reference bar from said reference pins.

The invention will now be described with reference to the accompanying drawings, which illustrate a non-limiting example, wherein:
Figure 1 shows schematically and substantially in blocks, a motorized cutting table for the implementation of the method according to the dictates of the present invention; and
Figures 2 to 7 are figures similar to Figure 1 and schematically illustrate different table configurations to implement corresponding steps of the manual cutting method of the laminated sheet according to the invention.

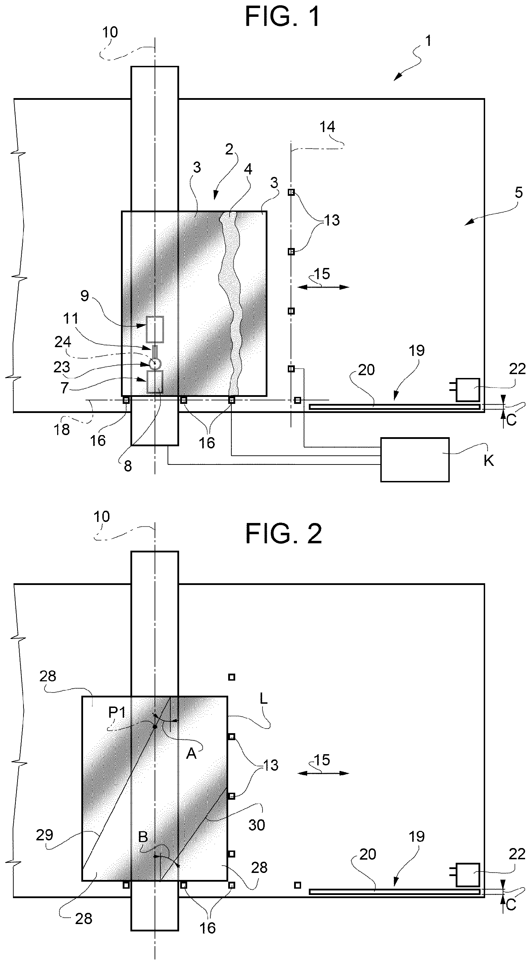

In Figure 1, reference numeral 1 globally denotes a motorised cutting machine or table for manually cutting a square or rectangular laminated glass sheet 2 and comprising two side glass plates 3 and an intermediate layer 4 of thermoplastic material, commonly known as PVB.

The table 1 is controlled by its own electronic control unit K, has a supporting plane 5 of the sheet 2 and comprises a cutting assembly 7, in itself known, for cutting the side glass sheets 3. The cutting assembly 7 is controlled by the unit K and comprises, for each side glass sheet 3, a relative incision tool 8 movable in opposite directions along an advancement or incision line, indicated by reference numeral 10 and a truncating device 9 of the glass sheets 3, also in itself known and not described in detail.

The table 1 comprises then a cutting assembly 11, for example of the incandescent lamp or blade type, also in itself known and controlled by unit K to cut the intermediate layer 4.

Again, with reference to Figure 1, the table 1 further comprises a row of motorized reference pegs 13, which are aligned with each other in a direction 14 parallel to the direction 10 and controlled by the unit K to move opposite ways in a direction 15 perpendicular to the directions 10 and 14.

The table 1 further comprises a row of fixed pegs 16, which are not able to move along the supporting plane 5 and are aligned along a zero direction 18 parallel to the direction 15 and arranged juxtaposed with a side edge of the table 1.

On the table 1 a parking station 19 of a reference bar 20 is made, which has a width C and is used in conjunction with the adjustable reference pegs 13 or the fixed pegs 16 to cut the laminated sheet 2, as better described below. The bar 20 is an everyday free bar made of wood, plastic or other equivalent material having characteristics such as not to damage the laminated sheet 2 and such as to be simply rested on the supporting plane 5 in any position necessary for cutting said laminated sheet 2.

According to a variant not illustrated, the station 19 is made in a different area of the plane 5 or outside the supporting plane 5 or even outside the table 1. According to a further variant, the table 1 comprises a motorized gripping head 22, for example with pincers or suction cups, controlled by the unit K to pick up the reference bar 20 from the station 19 and place it on the supporting plane 5.

Again, with reference to figure 1, the table 1 lastly comprises a hinging head 23 of the laminated sheet 2. The head 23, in itself known, rotates idly about its own axis 24 perpendicular to the plane 5 and moves under the control of the unit K in the direction 10 in opposite ways. Conveniently, the head 23 moves in unison with the incision tools 8. Preferably, the head 23 is coupled to one of the carriages bearing the incision tools 8. Alternatively, the head 23 is moved by a dedicated actuator also controlled by the unit K. In both cases, the hinging head 23 is controlled by the unit K and is therefore suitable to be placed in predefined positions along the direction 10 and to be kept stationary in such positions to allow the rotation of the laminated sheet 2 around fixed hinging axes perpendicular to the plane 5.

The cutting of the laminated sheet 2 is carried out as follows.

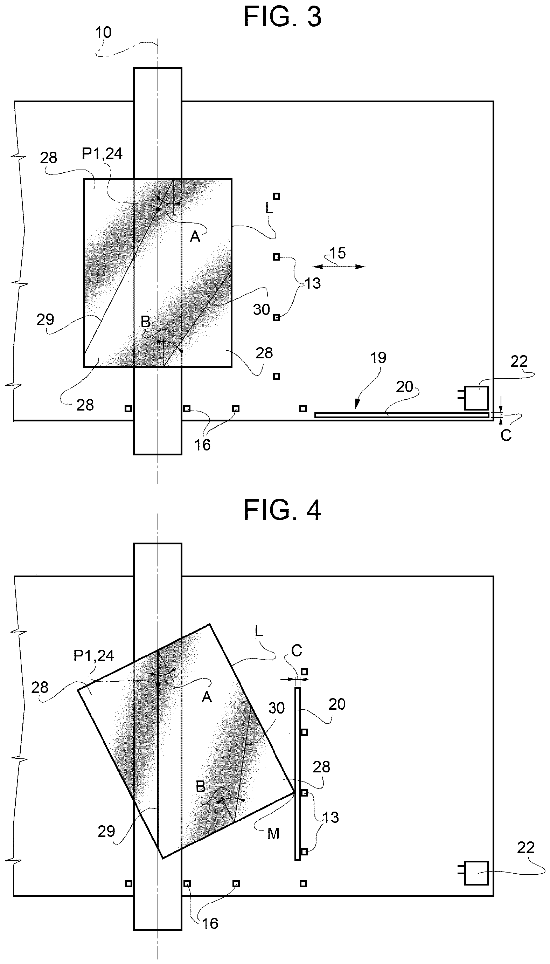

With reference to Figures 2 to 5, and assuming, by way of example, that three lengths 28 delimited by two cutting lines 29 and 30 are to be obtained from the laminated sheet 2, specifically two diagonal cutting lines, i.e. forming respective angles A and B other than zero and 90° with the outer perimeter sides of the sheet 2, e.g. the L side, the laminated sheet 2 is first brought into a reference position, illustrated in Figure 2, bringing it into abutment against the pegs 16 and against the row of pegs 13 previously positioned by the unit K according to the position of the line 25 and the angle A. According to a variant, the sheet 2 is positioned only against the pegs 13 and in a position away from the pegs 16. Regardless of the pegs used, when the laminated sheet 2 is arranged in the above-mentioned reference position, the cutting line 29 intersects the advancement direction 10 in the point P1. The laminated sheet 2 is thus hinged at point P1 by means of the head 23 so that it can be freely rotated about the axis 24. At this point, the unit K distances the pegs 13 from the sheet 2 by arranging them in a new reference position (Figure 3) and, if not yet distant, also distances the sheet 2 from the pegs 16 by moving the hinging head 23 in the direction 10 and bringing it into a fixed position such as to exclude contact between the sheet 2 and the pegs 16 during the rotation of said sheet 2, as seen in figure 3. The position of the head 23 and of the pegs 13 is calculated by the unit K again according to the position of the cutting line 29, the angle A and the width C of the bar 20.

At this point, the operator or head 22, if present, takes the reference rod 20 from the station 19 and places it on the supporting plane in abutment against the pegs 13 and thus parallel to the direction 10. After which the operator manually rotates the laminated sheet 2 anti-clockwise in figure 4 around the axis 24 until the edge M abuts against the rod 20 (figure 4). In this position, the cutting line 29 coincides exactly with the advancement direction 10. Keeping the sheet 2 in this position, the side glass plates 3 are first incised and then truncated in a known manner using in succession the incision tools 8 and the truncating device 9. In this phase, the intermediate layer 4 is not cut and the length 28 formed thus remains connected to the remaining part of the sheet 2.

After the truncation along the line 29, the bar 20 is moved away and returned to the station 19 or to an unused area of the plane 5, after which the unit K repositions the pegs 13 according to the position of the cutting line 30 and the angle B and the operator or the machine repositions, in turn, the laminated sheet 2 bringing it into abutment against the pegs 13 and 16 as done for the line 29. In this case too, for example by means of the head 23, if necessary the laminated sheet 2 is then distanced from the pegs 16 by an amount such that there is no interference between the sheet 2 and the pegs 16 during the subsequent rotation of the laminated sheet 2.

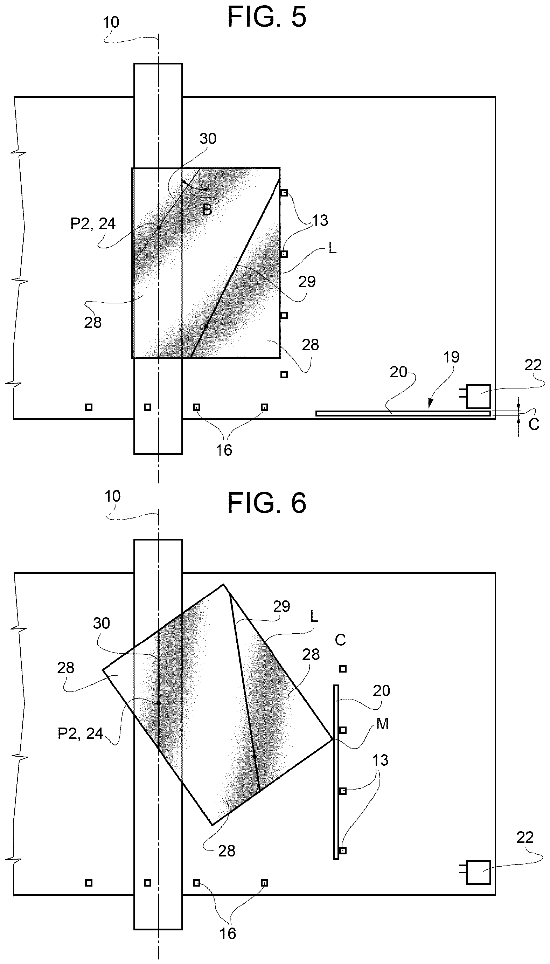

Alternatively, the laminated sheet 2 is arranged in abutment only against the pegs 13 and in a position spaced from the pegs 16. In both modes, the laminated sheet 2 is in the end spaced from the pegs 16, as shown in figure 5. In this position, the cutting line 30 intersects the advancement direction 10 at the point P2 (Figure 5). At this point, the sheet 2 is hinged in point P2 by means of the head 23 and the unit K repositions the pegs 13 again, distancing them from the sheet 2 again according to the position of the line 30, the angle B and the width C of the bar 20. After repositioning the pegs 13, the bar 20 is arranged in abutment against said pegs 13 in the manner described above, after which the operator rotates the sheet 2 anti-clockwise in figure 6 until the edge M of the sheet 2 again rests against the bar 20. Once this position is reached, the line 30 coincides exactly with the direction 10 and the glass sheets 3 are incised and truncated using the incision tools 8 and the truncating device 9. Upon completion of the truncation, the intermediate layer 4 is also cut along the cutting line 30 by the cutting unit 11 freeing a first length 28 from the remaining part of the laminated sheet 2. Subsequently, the operator returns the cutting line 29 to coincide with the direction 10 with relative ease since it is immediately visible. Note that this last positioning does not require absolute precision, since the device 11 is able to heat a large area around the advancement direction. When positioning is complete, the operator controls the cutting of the intermediate layer 4 along the line 30 by separating the remaining two lengths 28 of sheet from each other. Alternatively, the unit K repeats the operations previously carried out for cutting the glass sheets 3 along the line 29 thus assisting the operator also in the cutting phase of the layer 4 along said line 29. This is made possible by the fact that the perimeter edge of the laminated sheet is always taken as the reference edge for all the cuts along the planned sheet cutting lines.

According to a different cutting method, the bar 20 is not arranged against the pegs 13, as described above, but against the pegs 16. The choice of the row of pegs to be taken as reference is entrusted to the electronic unit K that decides on the basis of the external dimensions of the laminated sheet 2 and the positioning of the lines 29 and 30.

When the pegs 16 are selected as reference pegs, after positioning the laminated sheet 2 by means of the pegs 13 and the subsequent hinging of the laminated sheet 2 at point P1 or P2, the unit K moves, as needed, the pegs 13 and adjusts the position of the head 23 in the direction 10 so that, when the perimeter edge of the sheet 2 is positioned in abutment against the bar 20, the cutting lines 29 or 30 are perfectly aligned and superposed with the advancement direction 10.

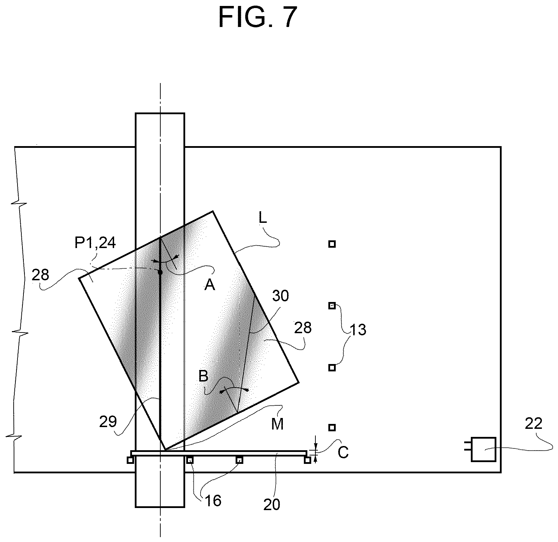

Figure 7 illustrates, by way of example, the cutting of the glass sheets 3 along the line 29 made using the bar 20 resting against the pegs 16.

From the foregoing it is evident that, in the method described and regardless of whether the bar 20 is arranged in abutment against the pegs 13 or against the pegs 16, the intervention of the operator is reduced to the mere positioning of the bar 20 either against the pegs 16 or against the pegs 13 previously positioned by the unit K and to the mere rotation of the laminated sheet 2 around a hinge axis, the position of which is determined and kept fixed always by the unit K, and until it encounters the bar 20 which stops its rotation. It follows that in the method described it is practically impossible to generate incorrect positioning due to errors attributable to the operator, although playing an active part in cutting the sheet. Experimentally, it has been verified that, with respect to the known cutting methods, the above described method drastically reduces the geometric and dimensional errors of the lengths of sheet 28.

The reduction of errors is also attributable to the fact that both the cutting lines 29 and 30 are positioned taking as reference always the original outer perimeter edge of the laminated sheet 2. In fact, the perimeter edge of the laminated sheet 2 does not change during the execution of the various diagonal cuts 29,30, since the cuts 28 continue to be joined together until the layer 5 has been cut along the last planned cutting line.

The use of an abutment bar eliminates, then, the possibility of error in the positioning phase of the sheet, since, in practice, it creates a continuous mechanical reference that annuls the discontinuity of the pegs 13,16.

From the above it is evident that the cutting method described can be applied for cutting laminated glass sheets along cutting lines the same as, or different from, the cutting lines 29 and 30 indicated by way of example both in number and in inclination with respect to the outer perimeter sides of the laminated sheet to be cut. Specifically, the method described can be used to cut the laminated sheet 2 along a single diagonal cutting line, e.g. the diagonal line 29. In this case, the intermediate layer 4 can be cut immediately after the truncation of the side glass sheets 3 by separating the length or after the execution of other cuts or other machining for which it is convenient for purposes of maintaining dimensional precision to keep the lengths of sheet temporarily joined together.

## Claims

1. A cutting method for cutting a laminated glass sheet manually comprising two side glass sheets and one intermediate layer of thermoplastic material; the sheet is cut along at least a first diagonal cutting line forming an angle other than zero and other than 90° with a peripheral side of the sheet for forming at least two lengths of sheet, the method comprising the steps of:
- using a cutting table comprising a sheet supporting plane, a first cutting assembly for the side glass sheets having incision tools which are movable along a first advancement direction, a second cutting assembly for the intermediate layer of thermoplastic material, a row of fixed reference pegs, a row of reference pegs adjustable in position along said sheet supporting plane in a positioning direction perpendicular to said advancement direction, and a hinging head for said laminated sheet rotates idly around its own axis perpendicular to the supporting plane and intersecting said advancement direction and motorized to translate parallel with the advancement direction, and an electronic control unit of the cutting assembly, the adjustable reference pegs and of said hinging head,
- positioning the laminated glass sheet on said support plane, bringing the cutting line towards said advancement direction,
- truncating said side glass sheets and cutting said intermediate layer along said cutting lines creating the two lengths of the glass sheet;
**characterised in that** cutting along said first diagonal cutting line comprises the steps of:
- taking said first cutting line so that it intersects said advancement direction at an intersection point (P1), bringing a peripheral edge of said laminated sheet into abutment against at least said adjustable reference pins previously positioned by said electronic command and control unit, according to the position of said first cutting line,
- hinging said laminated sheet in said intersection point by means of said hinging head,
- repositioning said adjustable reference pins along said positioning direction or said hinging head along the advancement direction by means of said command and control unit, according to the angle formed by said first line with said peripheral edge,
- arranging a free reference bar abutting against said supporting plane and against the adjustable reference pins or against the fixed reference pins,
- rotating manually the laminated sheet around an axis passing by said intersection point until bringing an external peripheral point of the laminated sheet into abutment against said free reference bar,
- truncating said side glass sheets and cutting the intermediate layer along said first cutting line, and distancing said reference bar from said reference pins.

2. The method according to claim 1, **characterised in that**, the laminated glass sheet is further cut along at least a second cutting line after truncating said side glass sheets along said first cutting line; the intermediate layer is arranged along said first cutting line and is cut after having truncated said side glass sheets along said second cutting line so that the starting peripheral edge of the laminated glass sheet is always used as a reference point for the cutting along said second cutting line.

3. The method according to claim 2, **characterised in that** the cutting of said intermediate layer along said second cutting line is carried out immediately after the truncating of the side glass sheets along said second cutting line.

4. The method according to claim 2, **characterised in that** also said second cutting line is also a diagonal cutting line and **in that**, the cutting of said side glass sheets along said second cutting line comprises the steps of:
- repositioning the adjustable reference pins along said adjustable direction by means of said electronic unit according to the position of said second cutting line on said laminated sheet,
- bringing said second cutting line so as to intersect the feeding line in a second intersection point arranging the laminated sheet against at least said adjustable reference pins,
- hinging the laminated sheet in the second intersection point,
- repositioning the adjustable reference pins or said hinging head which retains said laminated sheet by means of said electronic command and control unit according to the angle formed by said second cutting line with said peripheral side,
- successively putting back the free reference bar abutting against a supporting plane and against the adjustable reference pins or against the fixed reference pins, and
- rotating manually the laminated sheet around a hinge axis passing by said second intersection point until the peripheral edge of the laminated sheet is arranged against said reference bar,
- truncating the side glass sheets along said second line, and successively truncating the intermediate layer along the said first and second cutting lines.

5. The method according to claim 4, **characterised in that** said intermediate layer is firstly cut along said second cutting line and then along said first cutting line.

6. The method according to any one of the previous claims, **characterised in that** the reference bar is placed manually against said reference pins by an operator.

7. The method according to claim 6, **characterised in that** choosing said pins against which said free bar is arranged, before rotating the sheet around said intersection point; the choice is carried out by said control unit according to the position of the hinged sheet and is therefore communicated to the operator that provides the positioning.

8. The method according to any one of the claims from 1 to 5, **characterised in that** arranging the free reference bar in a parking area of said support plane; the reference bar is removed from said parking area and is placed in abutment against said reference pins by means of a motorised gripping head controlled by said electronic command and control unit that autonomously chooses the pins against which the reference bar is arranged.

## Patentansprüche

1. Schneidverfahren zum manuellen Schneiden einer Verbundglasscheibe, die zwei Seiten-Glasscheiben und eine Zwischenschicht aus thermoplastischem Material aufweist; wobei die Scheibe entlang mindestens einer ersten diagonalen Schnittlinie geschnitten wird, die mit einer Umfangsseite einen von Null verschiedenen und einen von 90° verschiedenen Winkel bildet, um mindestens zwei Scheibenstücke zu bilden, wobei das Verfahren die folgenden Schritte aufweist:
- Verwenden eines Schneidetischs mit einer Scheibenstützebene, einer ersten Schneidanordnung für die Seiten-Glasscheiben mit Einschneidewerkzeugen, die entlang einer ersten Vorschubrichtung bewegbar sind, einer zweiten Schneidvorrichtung für die Zwischenschicht aus thermoplastischem Material, einer Reihe fester Referenzstifte, einer Reihe von Referenzstiften, deren Position entlang der Scheibenstützplatte in einer zur Vorschubrichtung senkrechten Richtung veränderbar ist, und einem Gelenkkopf für die Verbundscheibe, der frei um seine eigene Achse dreht, die senkrecht zur Stützplatte verläuft und die Vorschubrichtung schneidet, und der zur Bewegung parallel zur Vorschubrichtung motorisiert ist, und einer elektronischen Steuereinheit der Schneidanordnung, der verstellbaren Referenzstifte und des Gelenckopfs;
- Positionieren der Verbundglasscheibe auf der Stützebene, Bringen der Schnittlinie in Richtung der Vorschubrichtung;
- Abschneiden der Seiten-Glasscheiben und Durchschneiden der Zwischenschicht entlang den Schnittlinien, wodurch die beiden Stücke der Glasscheibe gebildet werden;
**dadurch gekennzeichnet, dass** das Schneiden entlang der ersten diagonalen Schnittlinie die folgenden Schritte aufweist:
- Vorsehen der ersten Schnittlinie derart, dass sie die Vorschubrichtung an einem Schnittpunkt (P1) schneidet, Bringen eines Umfangsrandes der Verbundscheibe in Anlage an mindestens den verstellbaren Referenzstiften, die zuvor durch die elektronische Befehls- und Steuereinheit entsprechend der Position der ersten Schnittlinie positioniert wurden,
- **Anlenken** der Verbundscheibe in dem Schnittpunkt mittels des Gelenckopfs,
- Repositionieren der verstellbaren Referenzstifte entlang der Positionierungsrichtung oder des Gelenkkopfs entlang der Vorschubbewegung mittels der Befehls- und Steuereinheit entsprechend dem von der ersten Linie mit dem Umfangsrad gebildeten Winkel,
- Anordnen einer freien Referenzleiste in Anlage an der Stützebene und in Anlage an den verstellbaren Referenzstiften oder den festen Referenzstiften,
- manuelles Drehen der Verbundscheibe um eine durch den Schnittpunkt verlaufende Achse, bis ein Außenumfangsrandpunkt der Verbundscheibe in Anlage an der freien Referenzleiste gebracht ist,
- Abschneiden der Seiten-Glasscheiben und Durchschneiden der Zwischenschicht entlang der ersten Schnittlinie und Entfernen der Referenzleiste von den Referenzstiften.

2. Verfahren nach Anspruch 1, **dadurch gekennzeichnet, dass** die Verbundglasscheibe ferner entlang mindestens einer zweiten Schnittlinie geschnitten wird, nachdem die Seiten-Glasscheiben entlang der ersten Schnittlinie abgeschnitten wurden; wobei die Zwischenschicht entlang der ersten Schnittlinie angeordnet wird und nach dem Abschneiden der Seiten-Glasscheiben entlang der zweiten Schnittlinie geschnitten wird, so dass der Ausgangs-Umfangsrand der Verbundglasscheibe stets als ein Referenzpunkt für das Schneiden entlang der zweiten Schnittlinie verwendet wird.

3. Verfahren nach Anspruch 2, **dadurch gekennzeichnet, dass** das Durchschneiden der Zwischenschicht entlang der zweiten Schnittlinie unmittelbar nach dem Abschneiden der Seiten-Glasscheiben entlang der zweiten Schnittlinie durchgeführt wird.

4. Verfahren nach Anspruch 2, **dadurch gekennzeichnet, dass** die zweite Schnittlinie ebenfalls eine diagonale Schnittlinie ist, und dass das Schneiden der Seiten-Glasscheiben entlang der zweiten Schnittlinie die folgenden Schritte aufweist:
- Repositionieren der verstellbaren Referenzstifte entlang der verstellbaren Richtung mittels der elektronischen Einheit entsprechend der Position der zweiten Schnittlinie auf der Verbundscheibe,
- Anordnen der zweiten Schnittlinie derart, dass sie die Vorschubrichtung in einem zweiten Schnittpunkt schneidet, wobei die Verbundscheibe in Anlage an zumindest den verstellbaren Referenzstiften angeordnet wird,
- **Anlenken** der Versbundscheibe in dem zweiten Schnittpunkt,
- Repositionieren der verstellbaren Referenzstifte oder des Gelenkkopfs, welcher die Verbundscheibe hält, mittels der elektronischen Befehls- und Steuereinheit entsprechend dem durch die zweite Schnittlinie mit der Umfangsseite gebildeten Winkel,
- sukzessives Zurückbewegen der freien Referenzleiste in Anlage an der Stützebene und in Anlage an den verstellbaren Referenzstiften oder den festen Referenzstiften,
- manuelles Drehen der Verbundscheibe um eine durch den zweiten Schnittpunkt verlaufende Achse, bis der Außenumfangsrandpunkt der Verbundscheibe in Anlage an der freien Referenzleiste gebracht ist,
- Abschneiden der Seiten-Glasscheiben entlang der zweiten Schnittlinie und sukzessives Durchschneiden der Zwischenschicht entlang der ersten und der zweiten Schnittlinie.

5. Verfahren nach Anspruch 4, **dadurch gekennzeichnet, dass** die Zwischenschicht zuerst entlang der zweiten Schnittlinie und danach entlang der ersten Schnittlinie durchschnitten wird.

6. Verfahren nach einem der vorhergehenden Ansprüche, **dadurch gekennzeichnet, dass** die Referenzleiste von einem Bediener manuell in Anlage an den Referenzstiften angeordnet wird.

7. Verfahren nach Anspruch 6, **dadurch gekennzeichnet, dass** das Wählen der Stifte, an welchen die freie Leiste in Anlage angeordnet wird, erfolgt, bevor die Scheibe um den Schnittpunkt gedreht wird; wobei die Wahl von der Steuereinheit entsprechend der Position der angelenkten Scheibe durchgeführt wird und daher dem Bediener mitgeteilt wird, der die Positionierung durchführt.

8. Verfahren nach einem der Ansprüche 1 bis 5, **dadurch gekennzeichnet, dass** die freie Referenzleiste in einem Parkbereich der Stützebene angeordnet wird; wobei die Referenzleiste aus dem Parkbereich entfernt wird und mittels eines motorisierten Greifkopfs in Anlage an den Referenzstiften platziert wird, wobei der Greifkopf von der elektronischen Befehls- und Steuereinheit, welche die Pins an welchen die Referenzleiste angeordnet wird, autonom wählt, gesteuert wird.

## Revendications

1. Procédé de découpe pour découper manuellement une feuille de verre laminée comprenant deux feuilles de verre latérales et une couche intermédiaire de matériau thermoplastique ; la feuille est coupée le long d'au moins une première ligne de coupe diagonale formant un angle autre que zéro et autre que 90° avec un côté périphérique de la feuille pour former au moins deux longueurs de feuille, le procédé comprenant les étapes suivantes :
- utiliser une table de coupe comprenant un plan de support de feuille, un premier ensemble de coupe pour les feuilles de verre latérales comportant des outils d'incision mobiles le long d'une première direction d'avancement, un second ensemble de coupe pour la couche intermédiaire de matériau thermoplastique, une rangée de chevilles de référence fixes, une rangée de chevilles de référence réglables en position le long dudit plan de support de feuille dans une direction de positionnement perpendiculaire à ladite direction d'avancement, et une tête articulée pour ladite feuille laminée tourne au ralenti autour de son propre axe perpendiculaire au plan de support et coupant ladite direction d'avancement et motorisée pour se déplacer parallèlement à la direction d'avancement, et une unité de commande électronique de l'ensemble de coupe, des chevilles de référence réglables et de ladite tête articulée,
- positionner la feuille de verre laminée sur ledit plan de support, amener la ligne de coupe vers ladite direction d'avancement,
- tronquer lesdites feuilles de verre latérales et couper ladite couche intermédiaire le long desdites lignes de coupe créant les deux longueurs de la feuille de verre ;
**caractérisé en ce que** la découpe le long de ladite première ligne de coupe diagonale comprend les étapes suivantes :
- prendre ladite première ligne de coupe de manière à ce qu'elle coupe ladite direction d'avancement en un point d'intersection (P1), en amenant un bord périphérique de ladite feuille laminée en butée contre au moins lesdites broches de référence réglables positionnées précédemment par ladite unité électronique de commande et de contrôle, selon la position de ladite première ligne de coupe,
- articuler ladite feuille laminée auxdits points d'intersection au moyen de ladite tête articulée,
- repositionner lesdites broches de référence réglables le long de ladite direction de positionnement ou de ladite tête articulée le long de la direction d'avancement au moyen de ladite unité de commande et de contrôle, selon l'angle formé par ladite première ligne avec ledit bord périphérique,
- disposer une barre de référence libre en butée contre ledit plan de support et contre les broches de référence réglables ou contre les broches de référence fixes,
- faire tourner manuellement la feuille laminée autour d'un axe passant par ledit point d'intersection jusqu'à amener un point périphérique externe de la feuille laminée en butée contre ladite barre de référence libre,
- tronquer lesdites feuilles de verre latérales et découper la couche intermédiaire le long de ladite première ligne de coupe, et éloigner ladite barre de référence desdites broches de référence.

2. Procédé selon la revendication 1, **caractérisé en ce que**, la feuille de verre feuilleté est en outre coupée le long d'au moins une seconde ligne de coupe après le troncage desdites feuilles de verre latérales le long de la première ligne de coupe ; la couche intermédiaire est disposée le long de ladite première ligne de coupe et est coupée après avoir tronqué lesdites feuilles de verre latérales le long de ladite seconde ligne de coupe de sorte que le bord périphérique de départ de la feuille de verre laminée est toujours utilisé comme point de référence pour la coupe le long de ladite seconde ligne de coupe.

3. Procédé selon la revendication 2, **caractérisé en ce que** la découpe de ladite couche intermédiaire le long de ladite seconde ligne de coupe est effectuée immédiatement après le troncage des feuilles de verre latérales le long de ladite seconde ligne de coupe.

4. Procédé selon la revendication 2, **caractérisée en ce que** ladite seconde ligne de coupe est également une ligne de coupe diagonale et **en ce que**, la coupe desdites feuilles de verre latérales le long de ladite seconde ligne de coupe comprend les étapes suivantes :
- repositionner les broches de référence réglables le long de ladite direction réglable au moyen de ladite unité électronique en fonction de la position de ladite seconde ligne de coupe sur ladite feuille laminée,
- amener ladite seconde ligne de coupe de manière à couper la ligne d'alimentation en un second point d'intersection disposant la feuille laminée contre au moins lesdites broches de référence réglables,
- articuler la feuille laminée au second point d'intersection,
- repositionner les broches de référence réglables ou ladite tête articulée qui retient ladite feuille laminée au moyen de ladite unité électronique de commande et de contrôle selon l'angle formé par ladite seconde ligne de coupe avec ledit côté périphérique,
- remettre successivement la barre de référence libre en butée contre un plan de support et contre les broches de référence réglables ou contre les broches de référence fixes, et
- faire tourner manuellement la feuille laminée autour d'un axe d'articulation passant par ledit second point d'intersection jusqu'à ce que le bord périphérique de la feuille laminée soit disposé contre ladite barre de référence,
- tronquer les feuilles de verre latérales le long de ladite seconde ligne, et tronquer successivement la couche intermédiaire le long desdites première et seconde lignes de coupe.

5. Procédé selon la revendication 4, **caractérisé en ce que** ladite couche intermédiaire est d'abord coupée le long de ladite seconde ligne de coupe et ensuite le long de ladite première ligne de coupe.

6. Procédé selon l'une quelconque des revendications précédentes, **caractérisé en ce que** la barre de référence est placée manuellement contre lesdites broches de référence par un opérateur.

7. Procédé selon la revendication 6, **caractérisé en ce que** l'on choisit lesdites broches contre lesquelles ladite barre libre est disposée, avant de faire tourner la feuille autour dudit point d'intersection ; le choix est effectué par ladite unité de commande en fonction de la position de la feuille articulée et est donc communiqué à l'opérateur qui assure le positionnement.

8. Procédé selon l'une quelconque des revendications 1 à 5, **caractérisé en ce que** l'on dispose la barre de référence libre dans une zone de stationnement dudit plan de support ; la barre de référence est retirée de ladite zone de stationnement et est placée en butée contre lesdites broches de référence au moyen d'une tête de préhension motorisée commandée par ladite unité électronique de commande et de contrôle qui choisit de manière autonome les broches contre lesquelles la barre de référence est disposée.
